# EUROPEAN PATENT APPLICATION

(11) **EP 1 452 264 A1**
(43) Date of publication of application: **01.09.2004**
(21) Application number: 04250838.2
(22) Date of filing: 17.02.2004
(51) Int. Cl.: B23P 15/00, C22C 1/08, B22D 25/00, F01D 5/18

(54) **Method of manufacturing gas turbine part using porous metal**

(30) Priority: 27.02.2003 JP 2003050448
(71) Applicant: KAWASAKI JUKOGYO KABUSHIKI KAISHA, Chuo-ku, Kobe-shi, Hyogo-ken (JP); Nakajima, Hideo, Takatsuki-shi, Osaka-fu (JP)
(72) Inventor: Isano, Kousou, Kobe-shi, Hyogo-ken (JP); Mizuta, Akiyoshi, Kobe-shi, Hyogo-ken (JP); Matsuzaki, Yuji, Asaki-shi, Hyogo-ken (JP); Kimura, Hideo, Kobe-shi, Hyogo-ken (JP); Nakajima, Hideo, Takatsuki-shi, Osaka-fu (JP)
(74) Representative: Charlton, Peter John

(57) **Abstract**

A method of manufacturing a gas turbine part including a member having fluid transmission paths therein utilized as a cooling/heat insulating structure, includes the steps of: melting a metal under pressurization of an atmospheric gas; dissolving a gas in the molten metal; and solidifying the metal to thereby manufacture the member including a porous metal having thus created pores. The pores of the porous metal are arranged as a plurality of through pores and/or closed pores, each of which is formed in an substantially linear shape by controlling an angle of a solid-liquid interface in solidification with respect to a plane perpendicular to a traveling direction of the solid-liquid interface which is a determination factor of a pore growing direction.

## Description

### BACKGROUND OF THE INVENTION

### Field of the Invention

The present invention relates to a method of manufacturing a gas turbine part using a porous metal having pores. The pores are created by dissolving a gas in a metal in a molten state and solidifying the metal so as to obtain a porous metal. Hereinafter, the porous metal is called a lotus type porous metal because the structure of the porous metal resembles a lotus root. Moreover, forming the structure of the porous metal is called forming a lotus metal structure, and the above-mentioned pores are called lotus pores.

### Description of the Related Art

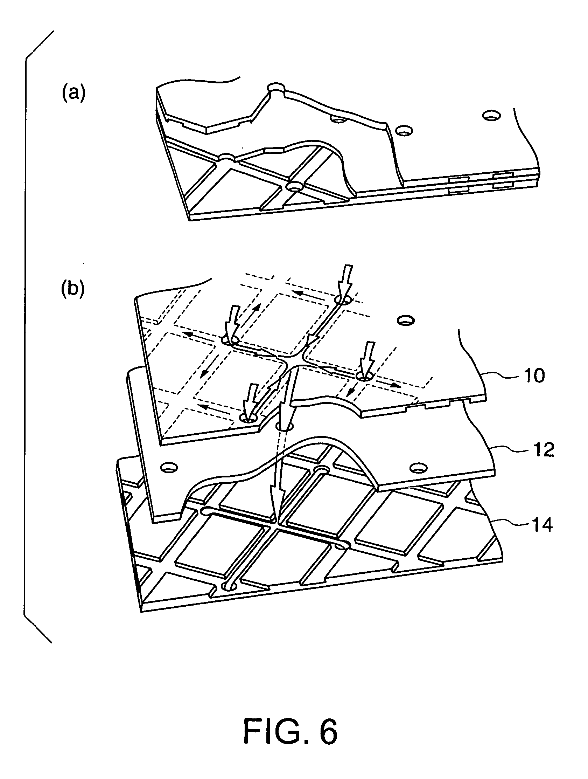

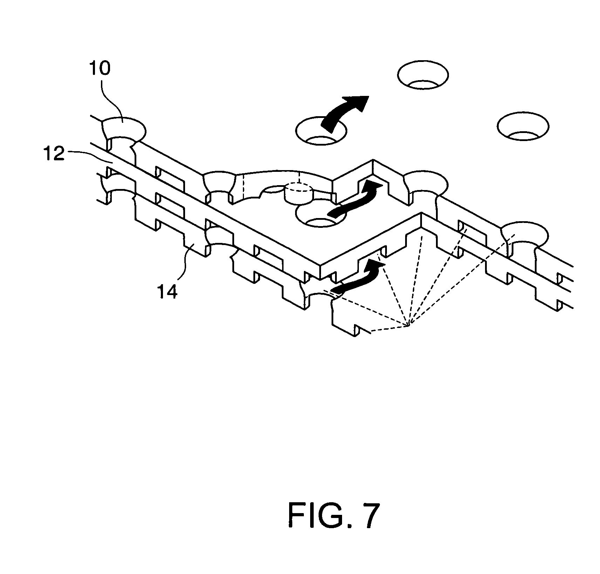

In a conventional method, when a part having a complex structure such as a gas turbine cooling part is manufactured, it is often manufactured using very difficult machining. For example, at present, some of heat shield panels used in a combustor liner of a gas turbine employ a transpiration cooling structure in which complex cooling pores must be machined and parts must be joined to each other by a complex manner. As shown in Figs. 6 and 7, there is, for example, a transpiration cooling structure composed of a low temperature layer 10, an intermediate temperature layer 12, and a high temperature layer 14 as an example of the heat shield panel used at present. Since the panel having this structure requires complex machining and the parts thereof must be divided, a manufacturing process of the panel is complex and the cost thereof is expensive. Although there is an effusion cooling panel having vertical pores or oblique pores as another example, this panel also requires complex processing and is expensive.

Further, as a recent manufacturing technology of a metal and the like having open pores and/or closed pores, there are a method of manufacturing a porous structural member having predetermined directionality by dissolving a gas in a molten metal under a pressure atmosphere and discharging the gas into a solid phase when the molten metal is solidified and a method of manufacturing a porous structural member having a predetermined sheet-shape or rod-shape by continuous casting. In manufacturing a porous metal, a pore growing direction can be controlled by controlling the growing direction of a solid-liquid interface (for example, refer to Japanese Patent Laid-Open Publication No. 2000-104130).

As described above, at present, some of the heat shield panels used in the combustor of the gas turbine employ the transpiration cooling structure in which the complex cooling pores must be machined and the parts must be joined to each other by the complex manner, and thus it is desired to develop a part manufacturing method which can significantly simplify a processing step and can easily execute processing at a low cost.

### SUMMARY OF THE INVENTION

An object of the present invention, which was made in view of the above points, is to provide a technology that can manufacture a product having a desired performance only by simple casting and forming process and can simply and easily execute processing at a low cost by applying a lotus type porous metal to gas turbine parts such as cooling structure parts, for example, a combustor liner, a turbine shroud, an exhaust duct, and the like of a gas turbine.

To achieve the above-mentioned object, a method of manufacturing a gas turbine part including a member having a plurality of fluid transmission paths therein utilized as a cooling/heat insulating structure, according to the present invention comprises the steps of: melting a metal as a raw material of the member under pressurization of an atmospheric gas; dissolving a gas in the metal in a molten state; and solidifying the metal to thereby manufacture the member including a porous metal having thus created pores, wherein the pores of the porous metal are arranged as a plurality of through pores and/or closed pores, each of which is formed in an substantially linear shape and acts as a fluid path and/or as a void exhibiting a heat insulting effect, by controlling an angle of a solid-liquid interface in solidification with respect to a plane perpendicular to a traveling direction of the solid-liquid interface, which is a determination factor of a pore growing direction.

Preferably, the pores of the porous metal are generated so as to extend obliquely with respect to a surface of the porous metal by controlling the angle of the solid-liquid interface with respect to the plane perpendicular to the traveling direction of the solid-liquid interface, so that the solid-liquid interface is oblique with respect to the plane perpendicular to the traveling direction.

Preferably, the metal to be melted is a sheet metal. The sheet metal is locally heated to generate a partial molten region in the sheet metal and cooled to solidify the partial molten region while the partial molten region is moved. The angle of the solid-liquid interface with respect to the plane perpendicular to the traveling direction of the solid-liquid interface is controlled by cooling both sides of the sheet metal in a different degree of cooling, respectively, so that the solid-liquid interface is oblique with respect to the plane perpendicular to the traveling direction.

Preferably, the sheet metal is heated by at least one of a heater and a high frequency coil to generate the partial molten region and cooled by a blower or the like to solidify the partial molten region.

Preferably, the sheet metal is cooled at a different position on the sides of the sheet, respectively, or in a different degree of cooling on the sides of the sheet, respectively.

Preferably, the metal to be melt is a sheet metal. The sheet metal is locally heated by at least one of heater and a high frequency coil to generate a partial molten region in the sheet metal and cooled to solidify the partial molten region while the partial molten region is moved. The angle of the solid-liquid interface with respect to the plane perpendicular to the traveling direction of the solid-liquid interface is controlled by obliquely drawing out the sheet member with respect to the heater and/or the high frequency coil, so that the solid-liquid interface is oblique with respect to the plane perpendicular to the traveling direction.

Preferably, the sheet metal is cooled by a blower or the like to solidify the partial molten region.

Preferably, the porous metal is formed using an inside cooled casting mold capable of obtaining a sheet cast member. The angle of the solid-liquid interface with respect to the plane perpendicular to the traveling direction of the solid-liquid interface is controlled by cooling both sides of the sheet cast member in a different degree of cooling, respectively, so that the solid-liquid interface is oblique with respect to the plane perpendicular to the traveling direction.

Preferably, the both sides of the sheet cast member are cooled in a different degree of cooling, respectively, by controlling a flow rate of a coolant or by a cooling mechanism.

Preferably, a desired cooling performance and a desired heat insulating performance of the member of the gas turbine part are realized by controlling a pore diameter and/or a porosity by controlling at least one of a pressure of the atmospheric gas and a speed of solidifying of the metal.

Preferably, the metal to be melted is a sheet metal. The sheet metal is locally heated to generate a partial molten region in the sheet metal and cooled to solidify the partial molten region while the partial molten region is moved.

Preferably, the sheet metal is heated by at least one of a heater and a high frequency coil to generate the partial molten region and cooled by a blower or the like to solidify the partial molten region.

A gas turbine part, which may be manufactured by the above-mentioned manufacturing method according to the present invention, is, for example, a cooling structure part arranged such that a plurality of fluid transmission paths are formed in the member and the member itself is cooled by transmitting a cooling fluid through the transmission paths in a high temperature atmosphere ("convection cooling" effect). Further, the gas turbine part is, for example, a cooling structure part arranged such that a plurality of fluid transmission paths are formed in the member, a cooling fluid is transmitted through the transmission paths in a high temperature atmosphere, and an increase in temperature of the member is suppressed by the cooling fluid that flows so as to cover the surface of the member in the high temperature atmosphere ("film cooling" effect).

A cooling structure part of a combustor liner of a gas turbine is exemplified as an example of the gas turbine part. Further, the gas turbine part also includes cooling structure parts such as a turbine shroud, an exhaust duct, and the like in addition to the combustor liner. When the film cooling effect of the porous metal is expected, pores, which are formed in a thin sheet and aligned with each other in a thickness direction or an oblique direction of the thin sheet, are necessary. Further, when the convection cooling effect of the porous metal is expected, pores, which are aligned with each other substantially in parallel with the surface of a thin sheet in the inside of the sheet, are necessary.

Further, when the heat insulating characteristics of the porous metal are utilized, it is contemplated to apply the porous metal to a heat shield, in particular, to a combustor inside portion, a turbine case inside portion, an oil line protection sheath, and the like. In this case, pores, which are aligned with each other substantially in parallel with the surface of a sheet having a certain degree of thickness, are necessary in the inside of the sheet.

When the noise absorbing characteristics of the porous metal are utilized, it is contemplated to apply the porous metal to a liner composed of a metal material and acting as a resonance damping member for eliminating combustion vibration in a lean burn state. In this case, a lot of pores are necessary, although they may be aligned or may not be aligned with each other in the thickness direction or the oblique direction of the sheet.

When the impact absorbing characteristics of the porous metal are utilized, it is contemplated to apply the porous metal to the lining of a casing to which a containment property is required. In this case, a lot of pores are necessary, although they may be aligned or may not be aligned with each other in the thickness direction.

Further, when the vibration isolating characteristics of the porous metal are utilized, it is contemplated to apply the porous metal to a bearing housing, a rotary shaft, or the like. In this case, a lot of pores are necessary, although they may be aligned or may not be aligned with each other in the thickness direction or the oblique direction of the sheet.

Since the present invention has the characteristic features as described above, the following advantages can be achieved.
(1) Since a gas turbine part, for example, a cooling structure part such as a combustor liner, a turbine shroud, an exhaust duct, and the like of a gas turbine must be formed in a complex shape, they are heretofore manufactured by very difficult machining in the conventional technology. On the other hand, in the present invention, the gas turbine part having a complex shape such as a panel having oblique pores can be manufactured only by the simple casting and forming processes by controlling the angle of the solid-liquid interface in solidification with respect to the plane perpendicular to the traveling direction of the solid-liquid interface which is the determination factor of the pore growing direction. Further, at the time, the desired cooling performance and the desired heat insulating performance can be realized by controlling the pore diameter and the porosity by controlling the atmospheric gas pressure and the solidifying speed.
(2) As an example, a transpiration cooling structure, which requires a complex machining for creating cooling pores and a process for joining parts by a complex manner, is heretofore used in some of heat shield panels used in a combustor for the gas turbine. However, a part manufacturing method, which can greatly simplify processing steps and can easily process a part at a low cost, can be realized by the present invention. Further, any of effusion cooling panels having vertical or oblique pores can be manufactured at a low cost using simple processing by controlling the solid-liquid interface according to the present invention.

### BRIEF DESCRIPTION OF THE DRAWINGS

The above and other objects, features and advantages of the present invention will become more apparent from the following description taken in connection with the accompanying drawings, in which:
Fig. 1 shows a perspective view (a) and side views (b), (c) and (d) for explaining the concept of a technology for manufacturing a flat sheet composed of a lotus type porous metal by solidifying a molten region which is generated and continuously moved in one direction using a high frequency coil in an embodiment of the present invention;
Fig. 2 shows a conceptual side sectional view (a) of an example of a metal sheet member composed of the lotus type porous metal and a conceptual side sectional side view (b) of an oblique pore panel obtained from the metal sheet member obtained by the embodiment of the present invention;
Fig. 3A shows a conceptual vertical sectional view for explaining an inside cooled cast molding of an embodiment of the present invention;
Fig. 3B shows a conceptual vertical sectional view for explaining the inside cooled cast molding of the embodiment in which the level of molten metal is higher than that shown in Fig. 3A;
Fig. 4 shows a conceptual perspective view of an example of a heat shield panel using a lotus type porous metal having oblique pores obtained by the embodiment of the present invention;
Fig. 5 is a schematic side elevational view for explaining a cooling mechanism of a heat shield panel composed of a porous material;
Fig. 6 shows a perspective view (a) for explaining an example of a conventional heat shield panel and an exploded view (b) of the same; and
Fig. 7 is an enlarged view for explaining an example of the conventional heat shield panel.

### DESCRIPTION OF THE PREFERRED EMBODIMENTS

Although an embodiment of the present invention will be described below, the invention is by no means limited to the embodiment, and it is possible to embody the invention by appropriately modifying the embodiment. That is, in the embodiment, although the manufacture of a heat shield panel having oblique pores and used in a combustor of a gas turbine is described as an example, the present invention is not limited to the heat shield panel and can be also applied to other heat insulation (heat shield) structure, forced cooling structure, and the like used in the gas turbine and the like. Note that it is contemplated that a merit of providing a practical alloy with a lotus structure mainly resides in that the number of parts and a processing cost of a complex engine structure can be reduced, the reliability of the engine can be improved by the simplified structure of the engine, and the like, and by making use of the alloy as a heat insulation structure or as a forced cooling structure (lotus pores are used as cooling paths of a sweat cooling structure, a film cooling structure, and the like).

A combustor liner for an aircraft engine, for example, may be locally exposed to combustion gases having a temperature exceeding 2000°C. In this environment, there is a case that a thermal gradient is locally produced in the liner and thus a large amount of thermal stress acts on the liner in a circumferential direction so that the liner is finally broken. Therefore, it is important to examine a method of effectively cooling or thermally insulating the liner in order to cool it with a minimum amount of cooling air while reducing the stress and to secure a large amount of combustion air.

It is contemplated to dispose a plurality of heat resistant panels adjacent to each other inward of the liner in a circumferential direction and in an axial direction and to protect the liner from a severe temperature environment as a means for reducing the thermal stress. In the thermal stress reduction means composed of only a continuous liner, when the liner is partly damaged, the overall liner must be replaced. In contrast, the panel structure described above is also advantageous in maintenance because only a damaged panel may be replaced. It is contemplated as effective to attach the lotus type porous metal on the inside of the liner as a panel also when a lotus type porous metal is used as a cooling/heat insulating member of the combustor liner.

In this embodiment, a metal as a raw material is melted under pressurization of an atmospheric gas, a gas is dissolved in the metal in a molten state, and then the metal is solidified, thereby a member composed of a porous metal having thus created pores is manufactured.

At the time, a pore growing direction can be controlled so as to satisfy a required performance by controlling the angle of a solid-liquid interface in solidification with respect to the plane perpendicular to the traveling direction of the solid-liquid interface, which is a determination factor of the pore growing direction.

Further, a pore diameter and a porosity can be controlled by controlling the atmospheric gas pressure, a solidifying speed, and the like.

For example, solidification at a higher speed generates a lot of finer gas bubbles, solidification at a constant speed generates uniform and thin pores, and cooling at a slow speed generates thick pores.

In addition to the above, an amount of a dissolved gas varies depending on a type of a metal (alloy), a melting temperature, and a melting time as well as a type of the gas and a gas pressure, and a cooling speed varies depending on a cooling method, the type of the metal (thermal conductivity). Accordingly, the size and the distribution of the pores can be adjusted by controlling these conditions.

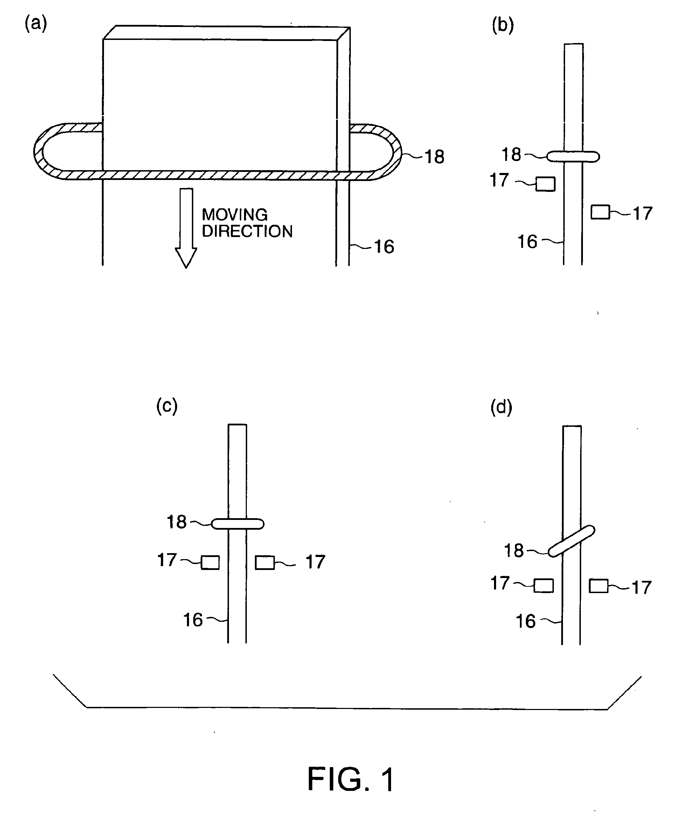

As an example, as shown in Fig. 1 (a), (b), (c) and (d) when a sheet member 16 composed of a metal is heated by a high frequency coil 18 for flat sheet under pressurization of an atmospheric gas and a molten region partially formed at the time is continuously moved, e.g., at a constant speed, and cooled by blowers 17 and the like, the solid-liquid interface with respect to the plane perpendicular to the traveling direction of the solid-liquid interface can be made oblique by cooling both the sides of the sheet in a different degree of cooling, respectively.

This is made, for example, (1) by cooling the sheet at a different position as shown in Fig. 1 (b), or (2) by cooling the sheet in a different degree of cooling at the same position as shown in Fig. 1 (c). Fig. 1 shows a case that the molten metal is solidified in one direction using the high frequency coil by continuously moving the molten region. A heater and the like may be used in placed of the high frequency coil.

Although Fig. 1 conceptually shows an arrangement for solidifying the molten metal in the one direction, an apparatus used in Fig. 1 can be composed of, for example, a heating chamber, a solidification adjustment chamber, a solidification chamber, and the like each having a pressure control system.

In the apparatus, a gas is dissolved in the molten metal using a hydrogen gas, a nitrogen gas, and the like, and the gas is discharged into a solid phase when the molten metal is solidified. Thereby, a porous structural member having predetermined directionality can be manufactured or a porous structural member having a predetermined sheet shape or rod shape can be manufactured by continuous casting.

Incidentally, a melted portion of the sheet member 16 maintains its plate shape due to the surface tension thereof. Preferably, the sheet member 16 is heated and melted such that both right and left ends in the width direction of the sheet member 16 maintain their solid condition without being melted.

As described above, when the lotus type porous metal is manufactured, the porosity, the pore diameter, the pore growing direction, and the like can be controlled by controlling the atmospheric gas pressure, the solidifying speed, the solidifying direction, and the like.

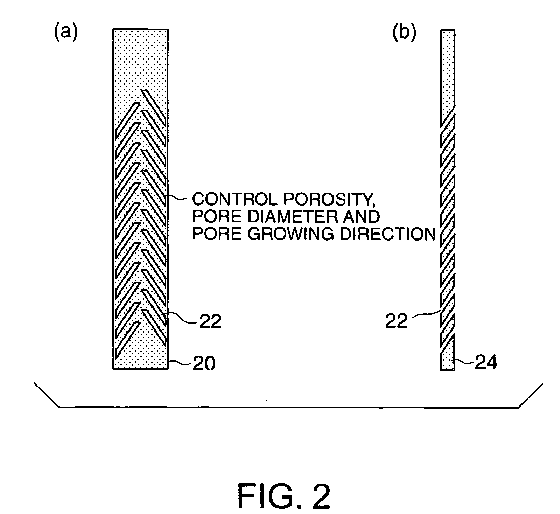

When casting is executed under the atmospheric gas pressure by controlling directionality, a sheet member 20, which is composed of the lotus type porous metal having oblique pores 22, as shown in, for example, the side sectional views (a) and (b) of Fig. 2, that satisfies the required performance, can be obtained by controlling the angle of the solid-liquid interface in solidification with respect to the plane perpendicular to the traveling direction of the solid-liquid interface, which is the determination factor of the pore growing direction, so that the solid-liquid interface is made oblique with respect to the plane perpendicular to the traveling direction of the solid-liquid interface.

The following methods are exemplified as a specific method of controlling the angle of the solid-liquid interface in solidification with respect to the plane perpendicular to the traveling direction of the solid-liquid interface. That is, when the sheet member 16 is heated by a heater, a high frequency coil 18, and the like under pressurization of an atmospheric gas and a molten region formed at the time is moved and cooled by a blower 17 and the like, the solid-liquid interface is made oblique with respect to the plane perpendicular to the traveling direction of the solid-liquid interface.

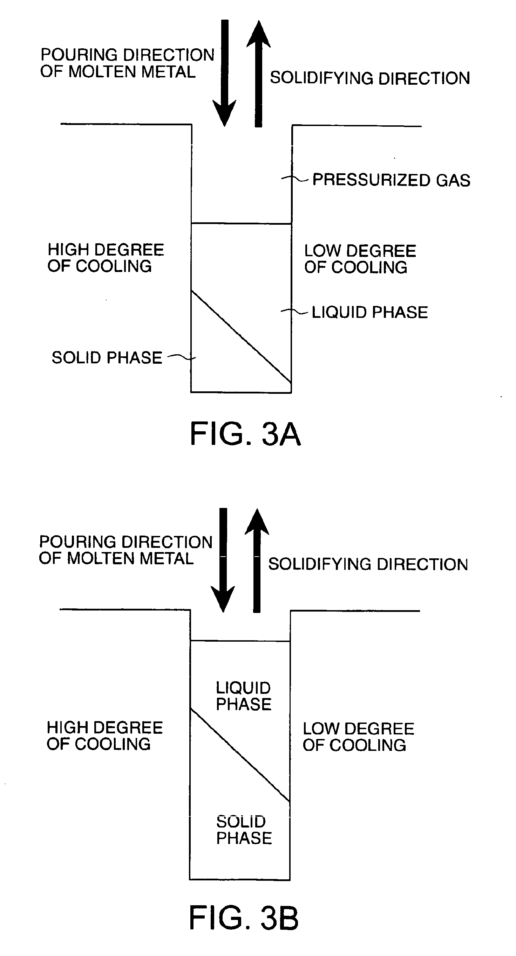

This is made (1) by cooling both the sides of the sheet 16 in a different degree of cooling, respectively (by, for example, cooling the sheet 16 at a different position as shown in Fig. 1 (b) or cooling the sheet 16 in a different degree of cooling as shown in Fig. 1 (C) as explained above), and (2) by drawing out the sheet member obliquely with respect to the heater and the high frequency coil 18 as shown in Fig. 1 (d), and (3) when a sheet is cast using an inside cooled cast mold capable of obtaining a sheet-shaped cast member under pressurization of an atmospheric gas, as shown in Figs. 3A and 3B, the solid-liquid interface is made oblique with respect to the plane perpendicular to the traveling direction of the solid-liquid interface by cooling both the sides of the sheet in a different degree of cooling, respectively (by executing, for example, a control by the flow rate of a coolant or a control by a cooling mechanism), and the like.

Since the solidification of the lotus type porous metal may be finished before pores are formed on the uppermost surface portion thereof, the portion must be removed. However, when the sheet member 20 obtained as described above is sliced to a predetermined thickness so that the pores 22 form through pores, an oblique pore panel 24, which can be used as a heat shield panel, can be manufactured.

As described above, it is possible to manufacture a panel having oblique pores only by the simple casting and forming processes. Further, it is possible to control factors such as a cooling pore diameter, the distribution of cooling pores, and a cooling pore direction can be controlled so that they satisfy the required performance by executing the casting while controlling directionality and the like under the atmospheric gas pressure.

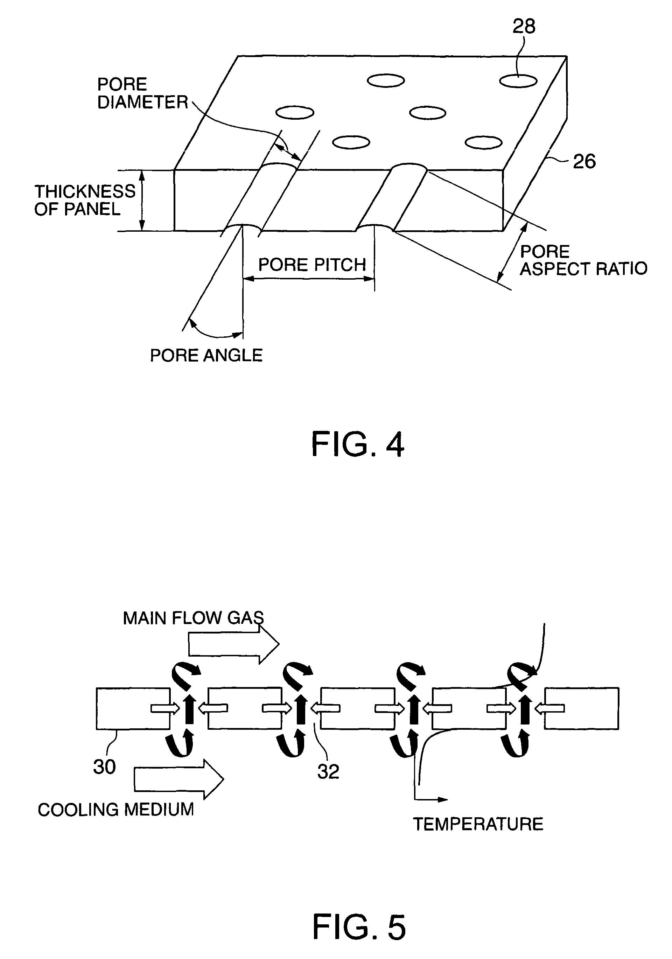

Fig. 4 conceptually shows an example of a heat shield panel using the lotus type porous metal having the oblique pores. An oblique pore panel 26 has a plurality of pores 28 which linearly pass through the oblique pore panel 26 in an oblique direction with respect to the thickness direction thereof. As described above, in the method of manufacturing the lotus type porous metal, the panel having the oblique pores can be manufactured only by the simple casting and forming processes by controlling the angle of the solid-liquid interface in solidification with respect to the plane perpendicular to the traveling direction of the solid-liquid interface, which is the determination factor of the pore growing direction, so that the solid-liquid interface is made oblique with respect to the plane perpendicular to the traveling direction of the solid-liquid interface.

A specific method of controlling the angle of the solid-liquid interface with respect to the plane perpendicular to the traveling direction of the solid-liquid interface is described above. Further, at the time, a predetermined cooling performance and a predetermined heat insulating performance can be realized by controlling the pore diameter and the porosity by controlling the atmospheric gas pressure and the solidifying speed. For example, a pore angle, a pore diameter, a pore pitch, a pore aspect ratio, and the like can be controlled in the structure shown in Fig. 4, thereby a desired cooling performance and a desired heat insulating performance can be realized.

Fig. 5 schematically shows a cooling mechanism of a heat shield panel composed of a porous material. The lotus type porous metal is used as a cooling structure and a heat insulating structure, in which lotus pores are used as a heat insulating structure, and as a forced cooling structure (in which the lotus pores are used as cooling paths of a sweat cooling structure, a film cooling structure, and the like). As shown in Fig. 5, however, in a heat shield panel 30 of the embodiment, pores 32 are used as cooling pores, and a heat transmission surface, which is exposed to high temperature main flow gases, is effectively cooled by a film cooling effect which is achieved by inside pore surfaces cooled by heat transmission by convection and a cooling medium blown out through the pores. Effects obtained by forming a lot of oblique pores are, for example, an increase in a heat transmission area, an improvement of a heat transmission rate, an increase in the film cooling effect, and an increase in a panel passing resistance.

In the present invention, the direction, the size, the porosity, the structure, and the like of the pores of the lotus type porous metal can be appropriately determined by controlling parameters such as a melting temperature, a dissolving gas pressure, a solidifying gas pressure, a cooling temperature, a solidification cooling temperature, and the volume ratio and the pressure of a hydrogen gas and the like and an inert gas.

## Claims

1. A method of manufacturing a gas turbine part including a member having a plurality of fluid transmission paths therein utilized as a cooling/heat insulating structure, comprising the steps of:
melting a metal as a raw material of the member under pressurization of an atmospheric gas;
dissolving a gas in the metal in a molten state; and
solidifying the metal to thereby manufacture the member including a porous metal having thus created pores, wherein the pores of the porous metal are arranged as a plurality of through pores and/or closed pores, each of which is formed in an substantially linear shape and acts as a fluid path and/or as a void exhibiting a heat insulting effect, by controlling an angle of a solid-liquid interface in solidification with respect to a plane perpendicular to a traveling direction of the solid-liquid interface, which is a determination factor of a pore growing direction.

2. The method of manufacturing a gas turbine part according to claim 1, wherein the pores of the porous metal are generated so as to extend obliquely with respect to a surface of the porous metal by controlling the angle of the solid-liquid interface with respect to the plane perpendicular to the traveling direction of the solid-liquid interface, so that the solid-liquid interface is oblique with respect to the plane perpendicular to the traveling direction.

3. The method of manufacturing a gas turbine part according to claim 2, wherein the metal to be melted is a sheet metal;
wherein the sheet metal is locally heated to generate a partial molten region in the sheet metal and cooled to solidify the partial molten region while the partial molten region is moved; and
wherein the angle of the solid-liquid interface with respect to the plane perpendicular to the traveling direction of the solid-liquid interface is controlled by cooling both sides of the sheet metal in a different degree of cooling, respectively, so that the solid-liquid interface is oblique with respect to the plane perpendicular to the traveling direction.

4. The method of manufacturing a gas turbine part according to claim 3, wherein the sheet metal is heated by at least one of a heater and a high frequency coil to generate the partial molten region and cooled by a blower or the like to solidify the partial molten region.

5. The method of manufacturing a gas turbine part according to claim 3, wherein the sheet metal is cooled at a different position on the sides of the sheet, respectively, or in a different degree of cooling on the sides of the sheet, respectively.

6. The method of manufacturing a gas turbine part according to claim 2, wherein the metal to be melt is a sheet metal;
wherein the sheet metal is locally heated by at least one of heater and a high frequency coil to generate a partial molten region in the sheet metal and cooled to solidify the partial molten region while the partial molten region is moved; and
wherein the angle of the solid-liquid interface with respect to the plane perpendicular to the traveling direction of the solid-liquid interface is controlled by obliquely drawing out the sheet member with respect to the heater and/or the high frequency coil, so that the solid-liquid interface is oblique with respect to the plane perpendicular to the traveling direction.

7. The method of manufacturing a gas turbine part according to claim 6, wherein the sheet metal is cooled by a blower or the like to solidify the partial molten region.

8. The method of manufacturing a gas turbine part according to claim 2, wherein the porous metal is formed using an inside cooled casting mold capable of obtaining a sheet cast member; and
wherein the angle of the solid-liquid interface with respect to the plane perpendicular to the traveling direction of the solid-liquid interface is controlled by cooling both sides of the sheet cast member in a different degree of cooling, respectively, so that the solid-liquid interface is oblique with respect to the plane perpendicular to the traveling direction.

9. The method of manufacturing a gas turbine part according to claim 8, wherein the both sides of the sheet cast member are cooled in a different degree of cooling, respectively, by controlling a flow rate of a coolant or by a cooling mechanism.

10. The method of manufacturing a gas turbine part according to claim 1, wherein a desired cooling performance and a desired heat insulating performance of the member of the gas turbine part are realized by controlling a pore diameter and/or a porosity by controlling at least one of a pressure of the atmospheric gas and a speed of solidifying of the metal.

11. The method of manufacturing a gas turbine part according to claim 1, wherein the metal to be melted is a sheet metal;
wherein the sheet metal is locally heated to generate a partial molten region in the sheet metal and cooled to solidify the partial molten region while the partial molten region is moved.

12. The method of manufacturing a gas turbine part according to claim 11, wherein the sheet metal is heated by at least one of a heater and a high frequency coil to generate the partial molten region and cooled by a blower or the like to solidify the partial molten region.
